# EUROPEAN PATENT APPLICATION

(11) **EP 4 811 649 A1**
(43) Date of publication of application: **23.09.2026**
(21) Application number: 24891016.8
(22) Date of filing: 16.07.2024
(51) Int. Cl.: H02P 29/00

(54) **SETTING METHOD, PROGRAM, COMPUTER-READABLE NON-TRANSITORY STORAGE MEDIUM, DRIVE SYSTEM, SETTING DEVICE, DRIVE DEVICE, AND ELECTRIC ACTUATOR**

(30) Priority: 17.11.2023 JP 2023196065
(71) Applicant: SMC Corporation, Tokyo 104-0031 (JP)
(72) Inventor: SAKAMURA, Miki, Kashiwa-shi, Chiba 277-0871 (JP)
(74) Representative: Keil & Schaafhausen Patentanwälte PartGmbB
(86) International application number: PCT/JP2024/025500
(87) International publication number: WO 2025/104971

(57) **Abstract**

A setting method for setting specification information on a drive device (14) that drives an electric actuator (12), the setting method comprising: an acquisition step in which, when the electric actuator is connected to the drive device, an acquisition unit (42) acquires, from a specification information storage unit (46) that stores specification information related to the specifications of electric actuators, the specification information corresponding to the connected electric actuator; and a setting step in which a setting unit (44) sets, on the drive device, the specification information acquired by the acquisition unit.

## Description

### TECHNICAL FIELD

The present invention relates to a setting method, a program, a computer-readable non-transitory storage medium, a drive system, a setting device, a drive device, and an electric actuator.

### BACKGROUND ART

In JP 2012-108608 A described below, a drive control device for an actuator is disclosed. The drive control device for the actuator controls driving of the actuator. The actuator is equipped with a displacement member and a drive unit. The drive unit, for example, is a linear motor, and serves to displace a displacement member.

### SUMMARY OF THE INVENTION

Recently, there has been a demand for a setting method, a program, a computer-readable non-transitory storage medium, a drive system, a setting device, a drive device, and an electric actuator with more favorable characteristics.

A first aspect of the present disclosure is characterized by a setting method for setting specification information in a drive device that drives an electric actuator, the setting method including an acquisition step in which, in a case where the electric actuator is connected to the drive device, an acquisition unit acquires the specification information corresponding to the electric actuator that has been connected, from a specification information storage unit configured to store the specification information that is information concerning a specification of the electric actuator; and a setting step in which a setting unit sets, in the drive device, the specification information that has been acquired by the acquisition unit.

A second aspect of the present disclosure is characterized by a program for causing a computer to execute the setting method according to the first aspect described above.

A third aspect of the present disclosure is characterized by a computer-readable non-transitory storage medium in which the program according to the second aspect described above.

A fourth aspect of the present disclosure is characterized by a drive system provided with a drive device that drives an electric actuator, the drive system including an acquisition unit configured to acquire, in a case where the electric actuator is connected to the drive device, specification information corresponding to the electric actuator connected to the drive device, from a specification information storage unit configured to store the specification information that is information concerning a specification of the electric actuator, and a setting unit configured to set, in the drive device, the specification information that has been acquired by the acquisition unit.

A fifth aspect of the present disclosure is characterized by a setting device included in the drive system according to the fourth aspect described above, the setting device is connected to the drive device, and the setting device includes the acquisition unit, the setting unit, and the specification information storage unit.

A sixth aspect of the present disclosure is characterized by a drive device in the drive system according to the fourth aspect described above, and the drive device includes the acquisition unit and the setting unit.

A seventh aspect of the present disclosure is characterized by an electric actuator in the drive system according to the fourth aspect described above, and the electric actuator includes the specification information storage unit.

According to the present invention, it is possible to provide a setting method, a program, a computer-readable non-transitory storage medium, a drive system, a setting device, a drive device, and an electric actuator with more favorable characteristics.

The above and other objects, features, and advantages of the present utility model will be easily understood from the following description of preferred embodiments, which will be described with reference to the accompanying drawings.

### BRIEF DESCRIPTION OF DRAWINGS

[FIG. 1] FIG. 1 is a schematic diagram of a drive system according to a first embodiment;
[FIG. 2] FIG. 2 is a block diagram of an electric actuator according to the first embodiment;
[FIG. 3] FIG. 3 is a block diagram of a drive device according to the first embodiment;
[FIG. 4] FIG. 4 is a block diagram of a setting device according to the first embodiment;
[FIG. 5] FIG. 5 is a flowchart showing a specification information setting process carried out in the setting device according to the first embodiment;
[FIG. 6] FIG. 6 is a block diagram of a drive device according to a second embodiment;
[FIG. 7] FIG. 7 is a flowchart showing a specification information setting process carried out in the drive device according to the second embodiment;
[FIG. 8] FIG. 8 is a block diagram of an electric actuator according to a third embodiment;
[FIG. 9] FIG. 9 is a block diagram of a drive device according to the third embodiment; and
[FIG. 10] FIG. 10 is a flowchart showing a specification information setting process carried out in the drive device according to the third embodiment.

### DETAILED DESCRIPTION OF THE INVENTION

Types of electric actuators include slider types, rod types, rotary tables, and the like. For example, in a slider type of electric actuator, the rotational motion of an electric motor is converted into linear motion by a linear motion mechanism, and the slide table is made to move along a linear guide.

As to the electric actuator, specifications for the electric actuator are determined for each model of the electric actuator. Information concerning the specifications for the electric actuator is information that is necessary for operating the electric actuator, and is managed as specification information. The specifications for the electric actuator, for example, are a minimum velocity and a maximum velocity or the like that can be set with respect to the electric actuator. The specifications differ depending on the model of the electric actuator.

The electric actuator is connected to a drive device, and is driven based on a drive signal that is delivered from the drive device. The drive device includes a plurality of ports, to each of which one electric actuator can be connected. In the drive device, specification information of the electric actuator is set for each of the ports.

Normally, the types of the electric actuators to be connected to the drive device are determined in advance. Therefore, when the drive device is shipped from a manufacturer, the specification information of the electric actuators to be connected to the drive device is set in the drive device.

On the other hand, in order to increase the versatility of the drive device, there may be cases in which the manufacturer ships the drive device without setting the specification information in the drive device. Such a drive is referred to as a blank controller. When electric actuators are connected to a drive device that is a blank controller, it is necessary for the user to set, in the drive device, the specification information of the electric actuators to be connected to the drive device.

However, when the user sets wrong specification information in the drive device, a malfunction may occur in the drive device and the electric actuators.

In the present disclosure, the specification information of the electric actuators connected to the drive device is automatically set in the drive device. In accordance with such a configuration, it is possible to suppress malfunctioning of the drive device and the electric actuators.

### [First Embodiment]

### [Configuration of Drive System]

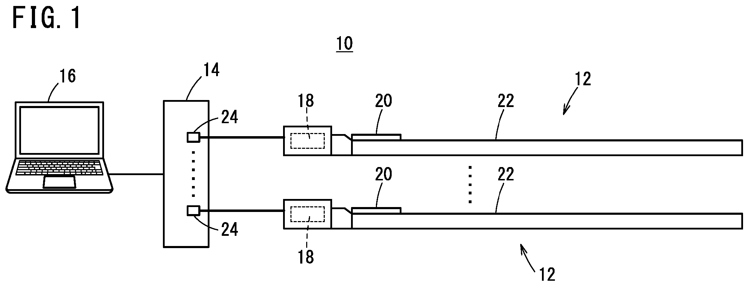

FIG. 1 is a schematic diagram of a drive system 10 according to a present embodiment. The drive system 10 is equipped with an electric actuator 12, a drive device 14, and a setting device 16.

The electric actuator 12 of the present embodiment is a slider type of electric actuator. The electric actuator 12 includes an electric motor 18, a slide table 20, and a linear guide 22. In the electric actuator 12, the rotational motion of the electric motor 18 is converted into linear motion by a non-illustrated linear motion mechanism, and the slide table 20 is made to move along the linear guide 22. The type of the electric actuator 12 is not limited to being a slider type, and may be another type such as a rod type, a rotary table, or the like.

The drive device 14 includes a plurality of ports 24. One electric actuator 12 can be connected to each of the ports 24. The drive device 14, based on a ladder program or the like that is created by a user, drives the electric actuator 12 that is connected to each of the ports 24. The drive device 14 may be a device that has only one of the ports 24.

The setting device 16, for example, is a personal computer. Setting software is installed in the setting device 16. Due to the setting software, the specification information of the electric actuators 12 is set in the drive device 14. When the specification information of the electric actuators 12 is set in the drive device 14, the setting device 16 is connected to the drive device 14. Other constituent devices may be included between the drive device 14 and the setting device 16. The other constituent devices are, for example, programmable logic controllers (PLC), gateway units, hubs, and the like. When the drive device 14 drives the electric actuators 12, the setting device 16 need not necessarily be connected to the drive device 14.

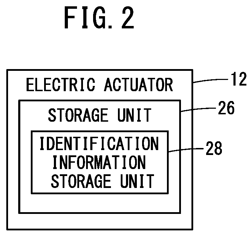

FIG. 2 is a block diagram of the electric actuator 12 according to the present embodiment. The electric actuator 12 includes a storage unit 26. The storage unit 26 is a computer-readable non-transitory storage medium. The storage unit 26, for example, is a non-volatile memory. As the non-volatile memory, for example, there may be cited a ROM (Read Only Memory), a flash memory, or the like.

The storage unit 26 includes an identification information storage unit 28. The identification information storage unit 28 stores unique identification information and model identification information of the electric actuator 12. The unique identification information, for example, is a serial number (production number). A different number is assigned to each individual electric actuator 12 as unique identification information. The unique identification information, apart from numbers, may include letters, symbols, or the like. The model identification information, for example, is a model number (a model name, a product model number) of the electric actuator 12. A different number is assigned to each model of the electric actuator 12 as model identification information. The model identification information, apart from numbers, may include letters, symbols, or the like.

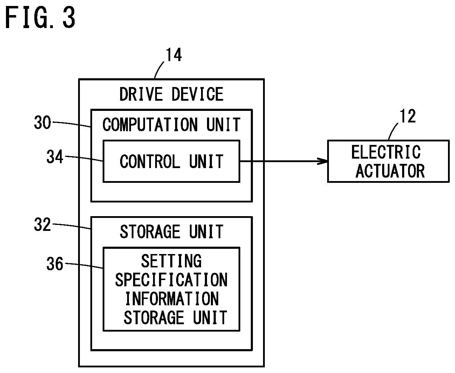

FIG. 3 is a block diagram of the drive device 14 according to the present embodiment. The drive device 14 includes a computation unit 30, and a storage unit 32. The computation unit 30, for example, is a processor such as a CPU (Central Processing Unit) or a GPU (Graphics Processing Unit) or the like. The computation unit 30 includes a control unit 34. The control unit 34 can be realized by the computation unit 30 executing a program stored in the storage unit 32. At least a portion of the control unit 34 may be realized by an integrated circuit such as an ASIC (Application Specific Integrated Circuit) or an FPGA (Field-Programmable Gate Array) or the like. Further, at least a portion of the control unit 34 may be realized by an electronic circuit including a discrete device.

The control unit 34 generates a drive signal based on a ladder program or the like that is created by the user. The generated drive signal is output to the electric actuator 12 that has been connected to each of the ports 24.

The storage unit 32 is constituted by a non-illustrated volatile memory, and a non-illustrated non-volatile memory. The volatile memory, for example, is a RAM (Random Access Memory) or the like. The non-volatile memory, for example, is a ROM, a flash memory, or the like. Data and the like are stored, for example, in the volatile memory. A program, a table, a map and the like are stored, for example, in the non-volatile memory. At least a portion of the storage unit 32 may be provided in the aforementioned processor, the integrated circuit, or the like. At least a portion of the storage unit 32 may be installed in a device that has been connected by a network to the drive device 14.

The storage unit 32 includes a setting specification information storage unit 36. The setting specification information storage unit 36 stores the specification information of the electric actuator 12 that has been connected to each of the ports 24 of the drive device 14. The specification information, as noted previously, is information concerning the specifications of the electric actuator 12. The specifications of the electric actuator 12, as noted previously, for example, are the minimum velocity and the maximum velocity or the like that can be set with respect to the electric actuator 12. As noted previously, the specifications of the electric actuator 12 differ depending on the model of the electric actuator 12.

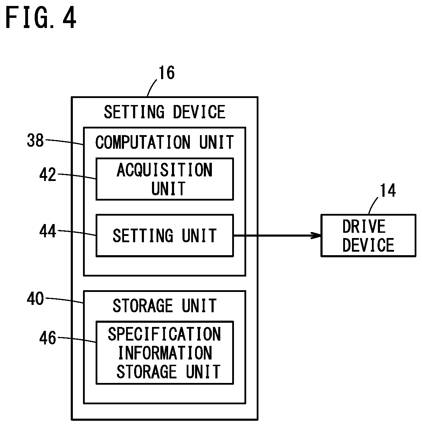

FIG. 4 is a block diagram of the setting device 16 according to the present embodiment. The setting device 16 includes a computation unit 38, and a storage unit 40.

The computation unit 38 is constituted by a processor such as a CPU, a GPU, or the like. The computation unit 38 comprises an acquisition unit 42 and a setting unit 44. The acquisition unit 42 and the setting unit 44 are realized by the computation unit 38 executing a program that is stored in the storage unit 40. At least a portion of the acquisition unit 42 and the setting unit 44 may be realized by an integrated circuit such as an ASIC, an FPGA, or the like. At least a portion of the acquisition unit 42 and the setting unit 44 may be realized by an electronic circuit including a discrete device.

The acquisition unit 42 acquires, from the electric actuator 12 that has been connected to each of the ports 24 of the drive device 14, the model identification information of the electric actuator 12. As noted previously, the model identification information, for example, is a model number (a model name, a product model number) of the electric actuator 12. The acquisition unit 42 acquires, from a specification information storage unit 46 of the storage unit 40 described later, the specification information of the electric actuator 12 corresponding to the model identification information that has been acquired. The specification information, as noted previously, is information concerning the specifications of the electric actuator 12. The specifications of the electric actuator 12, as noted previously, for example, are the minimum velocity and the maximum velocity or the like that can be set with respect to the electric actuator 12.

The setting unit 44 sets in the drive device 14 the specification information that has been acquired by the acquisition unit 42. More specifically, the setting unit 44 causes the setting specification information storage unit 36 that is provided in the drive device 14 to store the specification information that has been acquired by the acquisition unit 42. In accordance therewith, the specification information of the electric actuator 12 that has been connected to each of the ports 24 is stored in the setting specification information storage unit 36.

The storage unit 40 is a computer-readable non-transitory storage medium. The storage unit 40 is constituted by a non-illustrated volatile memory, and a non-illustrated non-volatile memory. The volatile memory, for example, is a RAM or the like. The non-volatile memory, for example, is a ROM, a flash memory, or the like. Data and the like are stored, for example, in the volatile memory. A program, a table, a map and the like are stored, for example, in the non-volatile memory. At least a portion of the storage unit 40 may be provided in the aforementioned processor, the integrated circuit, or the like. At least a portion of the storage unit 40 may be installed in a device that has been connected by a network to the setting device 16.

The storage unit 40 includes the specification information storage unit 46. The specification information storage unit 46 stores the specification information for each model of the electric actuator 12.

### [Specifications of Electric Actuator]

An example of the specifications of the electric actuator 12 will be described below.

As examples of specifications relating to the characteristics of the electric actuator 12 there can be cited a "minimum velocity," a "maximum velocity," a "maximum acceleration," a "maximum movement position," a "maximum pushing torque," and a "gear ratio."

The "minimum velocity" is a minimum value that can be set as a velocity of the slide table 20 of the electric actuator 12. The "maximum velocity" is a maximum value that can be set as the velocity of the slide table 20. The "maximum acceleration" is a maximum value of the acceleration that can be set as a movement acceleration of the slide table 20. The "maximum movement position" is a maximum value that can be set as a movement position of the slide table 20. The "maximum pushing torque" is a maximum value of a pushing torque that can be set with respect to the electric actuator 12. The "gear ratio" is a gear ratio of the electric actuator 12.

As examples of specifications relating to alarm threshold values, there can be cited an "excessive velocity level" and an "electrical power source abnormality level."

The "excessive velocity level" is a threshold value in order to output an alarm in the case that the velocity of the slide table 20 has become excessive. In the case that the velocity of the slide table 20 has become greater than or equal to the velocity specified by the "excessive velocity level," the alarm is output. The "electrical power source abnormality level" is a threshold value in order to output an alarm in the case that the voltage of a non-illustrated electrical power source has become excessively large or excessively small. In the case that the voltage of the electrical power source has fallen outside of a voltage range defined by the "electrical power source abnormality level," the alarm is output.

As examples of specifications relating to the characteristics of the electric motor 18, there can be cited an "inertia," a "rated current," a "motor resistance," a "motor inductance," and a "motor current gain." As examples of specifications related to a control characteristic gain, there can be cited a "PID (Proportional-Integral-Differential) gain," a "weakening magnetic field," a "regeneration ratio," and a "lead angle command." These are items of information necessary for the drive device 14 to control the electric actuator 12.

### [Specification Information Setting Process]

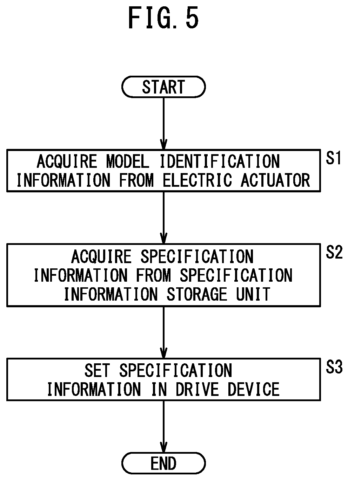

FIG. 5 is a flowchart showing a specification information setting process carried out in the setting device 16 according to the present embodiment.

In step S1, the acquisition unit 42 acquires the model identification information of the electric actuator 12, from the electric actuator 12 that has been connected to each of the ports 24 of the drive device 14. The model identification information, as noted previously, for example, is a model number (a model name, a product model number) of the electric actuator 12. Thereafter, the process transitions to step S2.

In step S2, the acquisition unit 42 acquires, from the specification information storage unit 46, the specification information of the electric actuator 12 corresponding to the model identification information that has been acquired. The specification information, as noted previously, is information concerning the specifications of the electric actuator 12. The specifications of the electric actuator 12, as noted previously, for example, are the minimum velocity and the maximum velocity or the like that can be set with respect to the electric actuator 12. Thereafter, the process transitions to step S3.

In step S3, the setting unit 44 sets in the drive device 14 the specification information that has been acquired by the acquisition unit 42. More specifically, the setting unit 44 causes the setting specification information storage unit 36 provided in the drive device 14 to store the specification information acquired by the acquisition unit 42. In accordance therewith, the specification information of the electric actuator 12 that has been connected to each of the ports 24 is stored in the setting specification information storage unit 36. Thereafter, the specification information setting process comes to an end.

### [Second Embodiment]

In the first embodiment, the specification information storage unit 46 is disposed in the storage unit 40 of the setting device 16. Furthermore, in the first embodiment, the specification information of the electric actuator 12 is set in the drive device 14 by the setting device 16.

In contrast thereto, according to the present embodiment, a specification information storage unit 52 is provided in the storage unit 32 of the drive device 14. Furthermore, in the present embodiment, the specification information of the electric actuator 12 is set in the drive device 14 by the drive device 14.

The configuration of the electric actuator 12 of the present embodiment is the same as the configuration of the electric actuator 12 according to the first embodiment (FIGS. 1 and 2).

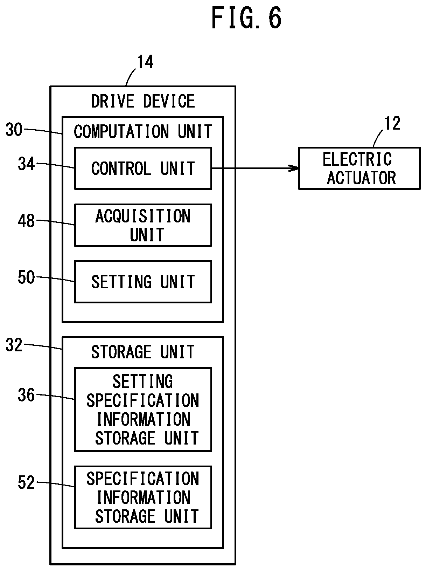

FIG. 6 is a block diagram of the drive device 14 according to the present embodiment. The drive device 14 includes the computation unit 30, and the storage unit 32.

The storage unit 32 comprises the specification information storage unit 52 and the setting specification information storage unit 36. The specification information storage unit 52 stores the specification information for each model of the electric actuator 12. The setting specification information storage unit 36 stores the specification information of the electric actuator 12 that has been connected to each of the ports 24 of the drive device 14.

The computation unit 30 comprises an acquisition unit 48, a setting unit 50, and the control unit 34. The acquisition unit 48 acquires, from the electric actuator 12 that has been connected to each of the ports 24 of the drive device 14, the model identification information of the electric actuator 12. The acquisition unit 48 acquires, from the specification information storage unit 52, the specification information of the electric actuator 12 corresponding to the model identification information that has been acquired.

The setting unit 50 sets in the drive device 14 the specification information that has been acquired by the acquisition unit 48. More specifically, the setting unit 50 causes the setting specification information storage unit 36 provided in the drive device 14 to store the specification information acquired by the acquisition unit 48. In accordance therewith, the specification information of the electric actuator 12 that has been connected to each of the ports 24 is stored in the setting specification information storage unit 36.

The control unit 34 generates a drive signal based on a ladder program or the like that is created by the user. The drive signal generated by the control unit 34 is output to the electric actuator 12 that has been connected to each of the ports 24.

In the first embodiment, when the specification information of the electric actuators 12 is set in the drive device 14, the setting device 16 is connected to the drive device 14. In the present embodiment, when the specification information of the electric actuators 12 is set in the drive device 14, the setting device 16 does not necessarily need to be connected to the drive device 14.

### [Specification Information Setting Process]

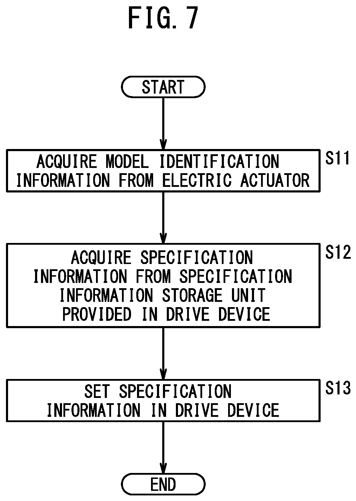

FIG. 7 is a flowchart showing a specification information setting process carried out in the drive device 14 according to the present embodiment.

In step S11, the acquisition unit 48 acquires the model identification information of the electric actuator 12, from the electric actuator 12 that has been connected to each of the ports 24. The model identification information, as noted previously, for example, is a model number (a model name, a product model number) of the electric actuator 12. Thereafter, the process transitions to step S12.

In step S12, the acquisition unit 48 acquires, from the specification information storage unit 52 that is provided in the drive device 14, the specification information of the electric actuator 12 corresponding to the model identification information that has been acquired. The specification information, as noted previously, is information concerning the specifications of the electric actuator 12. The specifications of the electric actuator 12, as noted previously, for example, are the minimum velocity and the maximum velocity or the like that can be set with respect to the electric actuator 12. Thereafter, the process transitions to step S13.

In step S13, the setting unit 50 sets in the drive device 14 the specification information that has been acquired by the acquisition unit 48. More specifically, the setting unit 50 causes the setting specification information storage unit 36 provided in the drive device 14 to store the specification information acquired by the acquisition unit 48. Thereafter, the specification information setting process comes to an end.

### [Third Embodiment]

In the first embodiment, the specification information storage unit 46 is disposed in the storage unit 40 of the setting device 16. Furthermore, in the first embodiment, the specification information of the electric actuator 12 is set in the drive device 14 by the setting device 16.

In contrast thereto, according to the present embodiment, a specification information storage unit 54 is provided in the storage unit 26 of the electric actuator 12. Furthermore, in the present embodiment, the specification information of the electric actuator 12 is set in the drive device 14 by the drive device 14.

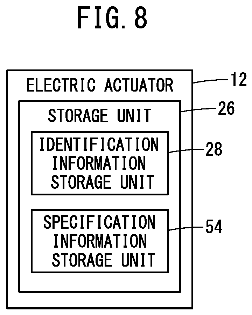

FIG. 8 is a block diagram of the electric actuator 12 according to the present embodiment. The electric actuator 12 includes the storage unit 26.

The storage unit 26 comprises the identification information storage unit 28 and the specification information storage unit 54. The identification information storage unit 28 stores unique identification information and model identification information of the electric actuator 12. The unique identification information, as noted previously, for example, is a serial number (production number). The model identification information, as noted previously, for example, is a model number (a model name, a product model number) of the electric actuator 12.

The specification information storage unit 54 stores the specification information of the electric actuator 12 in which the specification information storage unit 54 is provided. In the specification information storage unit 46 of the setting device 16 of the first embodiment, and further, in the specification information storage unit 52 of the drive device 14 of the second embodiment, there is stored the specification information for a plurality of models of the electric actuators 12 that are capable of being connected to the drive device 14. On the other hand, in the specification information storage unit 54 of the electric actuator 12 of the present embodiment, there is stored only the specification information of the electric actuator 12 in which the specification information storage unit 54 is provided.

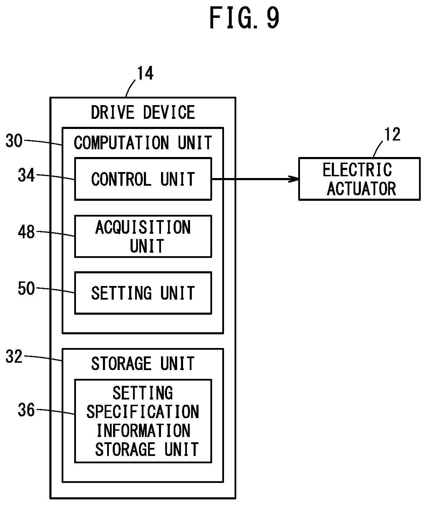

FIG. 9 is a block diagram of the drive device 14 according to the present embodiment. The drive device 14 includes the computation unit 30, and the storage unit 32.

The storage unit 32 includes the setting specification information storage unit 36. The setting specification information storage unit 36 stores the specification information of the electric actuator 12 that has been connected to each of the ports 24 of the drive device 14.

The computation unit 30 comprises the acquisition unit 48, the setting unit 50, and the control unit 34. The acquisition unit 48 acquires, from the specification information storage unit 54 of the electric actuator 12 that has been connected to each of the ports 24, the specification information of the electric actuator 12.

The setting unit 50 sets in the drive device 14 the specification information that has been acquired by the acquisition unit 48. In accordance therewith, the specification information of the electric actuator 12 that has been connected to each of the ports 24 is stored in the setting specification information storage unit 36.

The control unit 34 generates a drive signal based on a ladder program or the like that is created by the user. The drive signal generated by the control unit 34 is output to the electric actuator 12 that has been connected to each of the ports 24.

In the first embodiment, when the specification information of the electric actuators 12 is set in the drive device 14, the setting device 16 is connected to the drive device 14. In the present embodiment, when the specification information of the electric actuators 12 is set in the drive device 14, the setting device 16 does not necessarily need to be connected to the drive device 14.

### [Specification Information Setting Process]

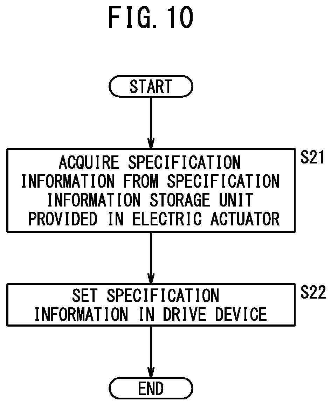

FIG. 10 is a flowchart showing a specification information setting process carried out in the drive device 14 according to the present embodiment.

In step S21, the acquisition unit 48 acquires the specification information of the electric actuator 12, from the specification information storage unit 54 provided in the electric actuator 12 that has been connected to each of the ports 24. The specification information, as noted previously, is information concerning the specifications of the electric actuator 12. The specifications of the electric actuator 12, as noted previously, for example, are the minimum velocity and the maximum velocity or the like that can be set with respect to the electric actuator 12. Thereafter, the process transitions to step S22.

In step S22, the setting unit 50 sets in the drive device 14 the specification information that has been acquired by the acquisition unit 48. More specifically, the setting unit 50 causes the setting specification information storage unit 36 provided in the drive device 14 to store the specification information acquired by the acquisition unit 48. Thereafter, the specification information setting process comes to an end.

### [Other Embodiments]

In the first embodiment, the setting device 16 acquires the specification information of the electric actuator 12 from the specification information storage unit 46 of the setting device 16, and sets the specification information of the electric actuator 12 in the drive device 14. In contrast thereto, the drive device 14 may acquire the specification information of the electric actuator 12 from the specification information storage unit 46 of the setting device 16, and may set the specification information of the electric actuator 12 in the drive device 14.

In the second embodiment, the drive device 14 acquires the specification information of the drive device 14 from the specification information storage unit 52 of the drive device 14, and sets the specification information of the electric actuator 12 in the drive device 14. In contrast thereto, the setting device 16 may acquire the specification information of the drive device 14 from the specification information storage unit 52 of the drive device 14, and may set the specification information of the electric actuator 12 in the drive device 14.

In the third embodiment, the drive device 14 acquires the specification information of the electric actuator 12 from the specification information storage unit 54 of the electric actuator 12, and sets the specification information of the electric actuator 12 in the drive device 14. In contrast thereto, the setting device 16 may acquire the specification information of the electric actuator 12 from the specification information storage unit 54 that is provided in the electric actuator 12, and may set the specification information of the electric actuator 12 in the drive device 14.

In relation to the above-described embodiments, the following Supplementary Notes are further disclosed.

### (Supplementary Note 1)

The setting method for setting specification information in the drive device (14) that drives the electric actuator (12), the setting method including the acquisition step in which, in the case where the electric actuator is connected to the drive device, the acquisition unit (42) acquires the specification information corresponding to the electric actuator that has been connected, from the specification information storage unit (46) configured to store the specification information that is information concerning the specification of the electric actuator, and the setting step in which the setting unit (44) sets, in the drive device, the specification information that has been acquired by the acquisition unit. In accordance with such a configuration, it is possible to suppress malfunctioning of the drive device and the electric actuator.

### (Supplementary Note 2)

In the setting method according to Supplementary Note 1, in the acquisition step, the acquisition unit may acquire the specification information from the specification information storage unit that is provided in the electric actuator. In accordance with such a configuration, it is possible to suppress malfunctioning of the drive device and the electric actuator.

### (Supplementary Note 3)

In the setting method according to Supplementary Note 1, in the acquisition step, the acquisition unit may acquire the specification information from the specification information storage unit that is provided in the drive device. In accordance with such a configuration, it is possible to suppress malfunctioning of the drive device and the electric actuator.

### (Supplementary Note 4)

In the setting method according to Supplementary Note 1, the setting device may set the specification information in the drive device, the setting device may include the acquisition unit, the setting unit, and the specification information storage unit, and in the acquisition step, the acquisition unit included in the setting device may acquire the specification information from the specification information storage unit included in the setting device. In accordance with such a configuration, it is possible to suppress malfunctioning of the drive device and the electric actuator.

### (Supplementary Note 5)

The program for causing the computer to execute the setting method according to any one of Supplementary Notes 1 to 4. In accordance with such a configuration, it is possible to suppress malfunctioning of the drive device and the electric actuator.

### (Supplementary Note 6)

The computer-readable non-transitory storage medium in which the program according to Supplementary Note 5 is stored. In accordance with such a configuration, it is possible to suppress malfunctioning of the drive device and the electric actuator.

### (Supplementary Note 7)

The drive system (10) provided with the drive device that drives the electric actuator, the drive system including the acquisition unit configured to acquire, in the case where the electric actuator is connected to the drive device, specification information corresponding to the electric actuator connected to the drive device, from the specification information storage unit configured to store the specification information that is information concerning the specification of the electric actuator, and the setting unit configured to set, in the drive device, the specification information that has been acquired by the acquisition unit. In accordance with such a configuration, it is possible to suppress malfunctioning of the drive device and the electric actuator.

### (Supplementary Note 8)

In the drive system according to Supplementary Note 7, the specification information storage unit may be provided in the electric actuator. In accordance with such a configuration, it is possible to suppress malfunctioning of the drive device and the electric actuator.

### (Supplementary Note 9)

In the drive system according to Supplementary Note 7, the specification information storage unit may be provided in the drive device. In accordance with such a configuration, it is possible to suppress malfunctioning of the drive device and the electric actuator.

### (Supplementary Note 10)

In the drive system according to Supplementary Note 7, the acquisition unit, the setting unit, and the specification information storage unit may be provided in the setting device configured to be connected to the drive device. In accordance with such a configuration, it is possible to suppress malfunctioning of the drive device and the electric actuator.

### (Supplementary Note 11)

The setting device in the drive system according to Supplementary Note 10. In accordance with such a configuration, it is possible to suppress malfunctioning of the drive device and the electric actuator.

### (Supplementary Note 12)

The drive device in the drive system according to any one of Supplementary Notes 7 to 9, the drive device including the acquisition unit and the setting unit. In accordance with such a configuration, it is possible to suppress malfunctioning of the drive device and the electric actuator.

### (Supplementary Note 13)

The electric actuator in the drive system according to Supplementary Note 8. In accordance with such a configuration, it is possible to suppress malfunctioning of the drive device and the electric actuator.

While the present disclosure has been described in detail, the present disclosure is not limited to the individual embodiments described above. These embodiments may be subjected to various additions, substitutions, modifications, partial deletions and the like, within a range that does not deviate from the essence and gist of the present disclosure, or the spirit of the present disclosure as derived from the contents described in the claims and equivalents thereof. These embodiments may also be implemented in combination. For example, in the above-described embodiments, the order of the operations and the order of the processes are shown as an example, and are not limited thereto. The same also applies to cases in which numerical values or mathematical expressions are used in the description of the aforementioned embodiments.

## Claims

1. A setting method for setting specification information in a drive device (14) that drives an electric actuator (12), the setting method comprising:
an acquisition step in which, in a case where the electric actuator is connected to the drive device, an acquisition unit (42) acquires the specification information corresponding to the electric actuator that has been connected, from a specification information storage unit (46) configured to store the specification information that is information concerning a specification of the electric actuator; and
a setting step in which a setting unit (44) sets, in the drive device, the specification information that has been acquired by the acquisition unit.

2. The setting method according to claim 1, wherein, in the acquisition step, the acquisition unit acquires the specification information from the specification information storage unit that is provided in the electric actuator.

3. The setting method according to claim 1, wherein, in the acquisition step, the acquisition unit acquires the specification information from the specification information storage unit that is provided in the drive device.

4. The setting method according to claim 1, wherein a setting device sets the specification information in the drive device,
the setting device includes the acquisition unit, the setting unit, and the specification information storage unit, and
in the acquisition step, the acquisition unit included in the setting device acquires the specification information from the specification information storage unit included in the setting device.

5. A program for causing a computer to execute the setting method according to any one of claims 1 to 4.

6. A computer-readable non-transitory storage medium in which the program according to claim 5 is stored.

7. A drive system (10) provided with a drive device that drives an electric actuator, the drive system comprising:
an acquisition unit configured to acquire, in a case where the electric actuator is connected to the drive device, specification information corresponding to the electric actuator connected to the drive device, from a specification information storage unit configured to store the specification information that is information concerning a specification of the electric actuator; and
a setting unit configured to set, in the drive device, the specification information that has been acquired by the acquisition unit.

8. The drive system according to claim 7, wherein the specification information storage unit is provided in the electric actuator.

9. The drive system according to claim 7, wherein the specification information storage unit is provided in the drive device.

10. The drive system according to claim 7, wherein the acquisition unit, the setting unit, and the specification information storage unit are provided in a setting device configured to be connected to the drive device.

11. The setting device in the drive system according to claim 10.

12. The drive device in the drive system according to any one of claims 7 to 9, the drive device comprising the acquisition unit and the setting unit.

13. The electric actuator in the drive system according to claim 8.
